# EUROPÄISCHE PATENTSCHRIFT

(11) **EP 1 218 092 B1**
(45) Veröffentlichungstag und Bekanntmachung des Hinweises auf die Patenterteilung: **24.03.2004**
(21) Anmeldenummer: 00958532.4
(22) Anmeldetag: 12.09.2000
(51) Int. Cl.: B01D 53/84

(54) **VERWENDUNG EINES FILTERS IN EINER FILTERANLAGE ZUM GERUCHS-, STAUB- UND KEIMABBAU IN ABLUFT**
USE OF A FILTER IN A FILTER SYSTEM FOR REMOVING ODORS, DUST AND GERMS IN OUTGOING AIR
UTILISATION D'UN FILTRE DANS UN SYSTEME DE FILTRE PERMETTANT D'ELIMINER LES ODEURS, LA POUSSIERE ET LES GERMES PRESENTS DANS DE L'AIR EVACUE

(30) Priorität: 13.09.1999 DE 19943854
(43) Veröffentlichungstag der Anmeldung: 03.07.2002
(73) Patentinhaber: Oldenburg, Jörg, 21734 Oederquart (DE)
(72) Erfinder: Oldenburg, Jörg, 21734 Oederquart (DE)
(74) Vertreter: Meyers, Hans-Wilhelm, Dr.Dipl.-Chem.
(86) Internationale Anmeldenummer: PCT/EP2000/008907
(87) Internationale Veröffentlichungsnummer: WO 2001/019498

(56) Entgegenhaltungen:
- DE-A- 2 630 115
- DE-A- 4 435 216
- US-A- 5 389 248
- US-A- 5 480 538
- DATABASE WPI Section Ch, Week 199629 Derwent Publications Ltd., London, GB; Class A35, AN 1996-285177 XP002154145 & RU 2 048 173 C (PERCHUGOV G YA), 20. November 1995 (1995-11-20)

## Beschreibung

Gegenstand der vorliegenden Erfindung ist die Verwendung eines Filters mit mindestens 2 Schichten in ein Abluftreinigungsanlage.

Gerüche aus der Tierhaltung, aus der Lebensmittel- und Futtermittelverarbeitung und aus anderen Quellen können im Umfeld der Anlagen zu unzumutbar häufigen und Ekel erregenden Geruchsimmissianen führen. Um diese zu vermeiden, sind Abluftreinigungsanlagen einsetzbar.

Während für Stäube Filter, die die Stäube in einem Filtermaterial zurückhalten, eingesetzt werden, kommen bei oxidierbaren Stoffen thermische oder biologische Verfahren zum Einsatz. Bei wasserlöslichen Stoffen werden Wäscher eingesetzt. Während die thermischen Verfahren zur Oxidation der in der Abluft eines Prozesses unerwünschten Stoffe unter höheren als den üblichen Umgebungstemperaturen entweder thermisch, thermisch-katalytisch, autotherm und mit oder ohne Wärmerückgewinnung verbrennen, laufen die biologischen Verfahren im Bereich üblicher Umgebungstemperaturen als kalte Verbrennung ab.

Die biologischen Verfahren reagieren in der Regel sensibler auf Prozessgifte als die thermischen Verfahren. Die biologischen Verfahren sind wegen des deutlich geringeren spezifischen Energieaufwandes und der niedrigen Investitionskosten jedoch insbesondere eher bei niedrig korizentrierten großvolumigen Abluftströmen die Technik der Wahl. Andererseits verlangen biologische Verfahren nach möglichst konstanten Bedingungen, wie sie bei diskontinuierlich arbeitenden Produktionsprozessen oft nicht anzufinden sind.

Im Bereich der Tierhaltung sowie der Lebensmitteltechnologie und der Futtermittelverarbeitung mit ihren Koch-, Brat-, Back-, Misch-, Dämpf-, Press- und Kühlprozessen sind beim Mehrschichtbetrieb über längere Zeit für die Biologie der Abluftreinigung konstante Betriebsbedingungen anzutreffen. In der Tierhaltung dauern die Produktionsperioden mehrere Wochen bis mehrere Jahre, wobei es hier prozessbedingt im Tages- und Jahresablauf zu stärkeren Konzentrations- und Volumenstromschwankungen kommt.

Bezogen auf den Produktionswert der Produkte sind thermische Oxidierungsverfahren in der Tierhaltung, der Lebensmittel- und Futtermittelverarbeitung in der Regel unwirtschaftlich, so dass hier vornehmlich biologische Abluftreinigungsverfahren eingesetzt werden. Die derzeit üblichste Technik sind in der Tierhaltung, der Lebensmittel- und Futtermittelverarbeitung Flächenbiofilter, die je nach Problemfall mit vorgeschalteten Kühlern, Wäschern, Befeuchtern, Staubfiltern und Entfettungstechniken eingesetzt werden können.

Die geruchs- und möglicherweise staub- sowie keimbeladene Abluft wird durch ein biologisch aktives Filterbett geleitet. Die in der Abluft enthaltenen Stoffe und Gase werden durch die im Filterbett vorhandenen Mikroorganismen unter günstigen Umständen nahezu vollständig zu geruchslosem Kohlendioxid und Wasserdampf abgebaut.

Der Einsatz von Flächenbiofiltem ist auch für die Tierhaltung, die Lebens- und Futtermittelherstellung eine technisch sinnvolle Lösung. Die bisherigen vorhandenen und auch in der Literatur beschriebenen Flächenbiofilter für die Tierhaltung verursachen jedoch Kosten, die etwa das 2-3fache der üblichen Gewinne betragen. Daher ist es bisher nicht sinnvoll, Biofilter als Alternative zur Betriebsstillegung oder - verlagerung einzusetzen.

Die relativ hohen Kosten ergeben sich aus
1. der Wahl des Filtermateriales. Die üblichen Filtermaterialien sind Reisig, Torf, Torf-Reisig-Gemische, gerissenes Wurzelholz, Schredderholz, Kompost mit und ohne Stützsubstanzen, Wurmkompost, Schaumglas und andere biologisch inerte Trägerstoffe. Alle üblicherweise verwendeten Materialien zeichnen sich entweder durch rel. geringe spezifische Oberflächen, die dann zu großen Filterschütthöhen führen, oder wegen ihrer feinfaserigen Struktur durch hohe Strömungswiderstände aus.
   Die Folge sind
   a) große Massen, die auf der Unterkonstruktion lagern und
   b) durch erhöhte Strömungswiderstände erhöhte Energiekosten.

   Mehr oder weniger problematisch ist die Beschaffung und Entsorgung der Filtermaterialien. Die favorisierten Torf-Gemische werden zunehmend weniger verwendet, weil der Torfabbau auf ökologische Bedenken und Widerstände stößt. Gerissenes Wurzelholz und Schredderholz sind biologisch schwer abbaubar. Sie müssen nach der Nutzung daher entweder deponiert oder getrocknet und verbrannt werden. Beide Verfahren sind mit rel. hohen Entsorgungskosten verbunden. Die hohen spezifischen Entsorgungskosten führen in der Regel dazu, dass die Filterschüttungen von Flächenbiofiltern an Prozessanlagen, in denen Ammoniak entsteht (Tierhaltung, Tierkörper- und Fischverwertung), seltener gewechselt werden, als. es wegen der Anreicherung von Stickstoff im Filterbett für einen störungsfreien Betrieb notwendig wäre.
   Weiterhin wirken sich die üblicherweise eingesetzten Schüttungen auf den Einbauort aus:
   Die üblichen Schütthöhen von 1 bis 2 m führen bei den hier beschrieben Materialien zu statischen Belastungen der Unterkonstruktion von ca. 100 bis 400 kg/m². Weil die Gewichte der Filtermaterialien relativ groß sind, erfolgt eine Beschickung und Leerung größerer Flächenbiofilter in der Regel durch mobile Ladefahrzeuge wie Radlader. Beide Faktoren, das eingesetzte Filtermaterial und die dafür notwendigen Transportfahrzeuge, benötigen entsprechend tragfähige und damit schwere Unterkonstruktionen, die den Bau eines Flächenbiofilters aus Gründen der Investitionskosten nur auf dem Erdboden als eigenständiges Bauwerk neben einer Produktionsanlage erlauben. Dies führt wiederum zu vermehrt versiegelten Flächen, die entweder aus landschaftspflegerischen Gründen als bedenklich angesehen werden und/oder zu einem erhöhten Gewerbeflächenbedarf mit entsprechenden Kosten für das benötigte Grundstück führen.
2. den bisher eingesetzten Befeuchtungsverfahren
   Biologische Verfahren verlangen zur Aufrechterhaltung der eingesetzten Biologie nach relativ gleichmäßigen Temperatur- und Feuchteverhältnissen. Die übliche Verfahrensweise ist hier, zur Rohluftkonditionierung Wäscher jedweder Art einzusetzen. Wäscher erlauben es, in der Rohluft vorhandene wasserlösliche Stoffe aus dem Stoffstrom auszuschleusen und zu neutralisieren oder in z.B. eine Abwasserklärung zu überführen. Die Nutzung von Wäschern ist jedoch mit erhöhten Strömungswiderständen des Rohgases, erhöhten Investitionskosten und bei der Neutralisierung von Filtergiften mit zusätzlichen Reagenzienkosten verbunden. Weiterhin ist ein Wäscher ein eigenständiges Reinigungsverfahren, für das tragfähige Stellplätze sowie entsprechende Zu- und Ableitungen benötigt werden.
   Alternativ anstelle des Einsatzes eines Wäschers vorgenommene direkte Bewässerungen des Filtermateriales führen in der Regel nur zu kosmetischen Erfolgen. Die Filteroberfläche ist nass und kalt, die Strömungswiderstände im Filterbett werden ungleichmäßig, die Biologie ist thermisch und aquatisch belastet und der Reinigungserfolg auf mittlere Sicht erfahrungsgemäß in Frage gestellt.

US-A-5,480,538 betrifft die Verwendung von Biofiltern zur Abluftreinigung, die ein durchlässiges Filterbett aufweisen und mit Mikroorganismen besetzt sind. McCOMBS et al. (US-A-5,480,538) offenbart zur biologisch oxydativen Abreinigung der Schadstoffe als Lebensgrundlage für die Mikroorganismen ein Filtermaterial aus einem Gemisch von 50 % Naturtorf, 35 % Stroh, 10 % Rottemist und 5 % Torfmoos (jeweils Volumenanteile). Nachteilig daran ist vor allem der zur Herstellung des Filtermateriales notwendige Mischvorgang, der bei den von McCOMBS et al. verwendeten Materialien wegen der verschiedenen Strukturen der eingesetzten Stoffe relativ schwierig zu einem homogenen Mischgut führt.

US-A-5,389,248 betrifft einen Bioreaktor zur aeroben biologischen Behandlung von Abwasser und Abgasen, die mit Kohlenwasserstoffen kontaminiert sind. Als Träger-material für die Biofilme werden u.a. auch strohhaltige Materialien genannt. Allerdings wird Stroh nicht als einziges Filtermaterial verwendet.

Auch die Offenbarung von PARÉ (US-A-5,389,248) schlägt beispielsweise Stroh zum Stützen des eigentlichen Filtermateriales Torf o.ä. vor. Weder bei der von McCOMBS et al. noch bei der von PARÉ vorgeschlagenen Anordnung dient das Stroh als Filtermaterial, es wird nur für Hilfsfunktionen zum Stützen des Torfes eingesetzt.

Die DE-A-44 35 216 betrifft ein Haimdachfertigteil aus einer Vielzahl parallel zueinander ausgerichteter Halme aus Rohr, Reet, Schilf oder ähnlichem, die zu einem transportfähigen flächigen Dachelement verbunden sind. Zur Funktion dieses Dachteils im Hinblick auf die Reinigung von Abluft ist diesem Dokument nichts entnehmbar.

Die DE-A-26 30 115 betrifft einen Viehstall, der als Zwischendecke zur Wärmedämmung eine Strohdecke aufweist. Die Zwischendecke soll das Stallklima verbessern, jedoch keine Abluft reinigen.

RU-C-2048173 offenbart die Verwendung von frisch geschnittenem Stroh, das im Gegenstrom Abluft aus möbelherstellenden Betrieben abfängt. Der zu reduzierende Schadstoff dabei ist Formaldehyd. RU-C-2035211 offenbart die Reinigung von Abgasen, die während der Verarbeitung von Vogelkot entstehen. Die Abgase werden zunächst von Staub befreit und dann durch eine alkalische Lösung geleitet, die ein Oxidationsmittel (Kalium-Permanganat) enthält. Daraufhin wird das Gras durch einen Filter bestehend aus den aufeinanderfolgenden Schichten von Torf, natürlichem Zeolith, Stroh und Zweigen geleitet, in denen die jeweiligen Schichten in Verhältnissen von 60 - 62 / 25 - 30 / 5 - 10 / 5 - 10 angeordnet sind. Dabei strömt das Abgas zunächst durch die Torfschicht, gefolgt von der Zeolithschicht und dann der Strohschicht.

Das der Erfindung zugrunde liegende technische Problem bestand darin, einen einfachen Biofilter zur Verfügung zu stellen, der es erlaubt, insbesondere Geruchsbelästigung, die beim Betrieb von landwirtschaftlichen Produktionsantagen, Lebens- und Futtermittelbetrieben entstehen, zu vermindern und die geruchsbelästigenden Stoffe aus der Abluft abzureichern oder zu filtrieren.

Gelöst wird das der Erfindung zugrunde liegende technische Problem in überraschend einfacher Weise durch die Verwendung eines Filters mit mindestens 2 Schichten, der dadurch gekennzeichnet ist, dass eine erste Schicht aus Stroh und eine zweite Schicht, die ligninhaltig ist und auf der ersten Schicht angeordnet ist und/oder eine zweite Schicht aus einer gasdurchlässigen, wasserhaltenden Lage gebildet wird und die Schichten so in der Abluftanlage angeordnet sind, dass eine zu filtrierende Ablüft zunächst die erste Schicht das Filters durchströmt.

Das Stroh, das im Filter eingesetzt wird, muss zum überwiegenden Teil mit einer ligninhaltigen Schicht als zweiter Schicht versehen sein. Natürlicherweise ist der das Stroh bildende frisch geerntete (gedroschene) Getreidehalm mit einer ligninhaltigen Schicht versehen. Durch längere Lagerung und durch Umwelteinflüsse bedingt, verliert der Halm diese ligninhaltlge Schicht. Damit verschlechtert sich aber die Verwendbarkeit des Strohs als Filtermaterial deutlich.

Das Filtermaterial besteht vorzugsweise aus lose aufgeschüttetem Stroh mit einer nach einer Setzungszeit von wenigen Tagen vorhandenen Schichthöhe von in der Regel ca. 20 bis 30 cm. Je nach Anwendungsfall können auch andere Schichthöhen gewählt werden. Das verwendete Stroh ist vorzugsweise frisch geerntet. Wird gelagertes Stroh eingesetzt, sollte es nicht länger als etwa zwei Jahre gelagert worden sein.

Der Vorteil von Stroh gegenüber den anderen üblicherweise eingesetzten und beschriebenen Filtermaterialien ist, dass dieses als landwirtschaftliches Nebenprodukt der Getreideerzeugung ökologisch unbedenklich ist. Stroh weist eine große spezifische Oberfläche auf, wodurch die unter sonst gleichen Bedingungen notwendigen Schütthöhen reduziert werden können. Feuchtes geschüttetes und über mehrere Wochen und Monate abgelagertes Stroh hat eine geringe spezifische Dichte von etwa 50 kg je m³. Der Strömungswiderstand von gasförmigen Stoffen in Stroh ist vergleichsweise gering.

Die zweite Schicht wird aus einer gasdurchlässigen wasserhaltenden Lage gebildet, die vorzugsweise aus porösem an organischen Material und/oder aus porösen organischen Substanzen gebildet werden. Diese zweite Schicht bildet dabei die zweite Lage eines zweilagigen Filters, welcher als erste Lage das erwähnte Stroh enthält, welches mit einer ligninhaltigen Beschichtung versehen sein kann. Als poröses anorganisches Material kommt insbesondere Blähton, Perlite, Schumglas in Frage. Als poröse organische Substanzen können insbesondere geschredderte Holzmaterialien wie Hackschnitzel, Rindenmulch, Sägespäne, Laub, Nadeln, sowie aufgeschäumte und zerkleinerte Kunststoffe eingesetzt werden.

Erfindungsgemäß verwendet wird des Filter in einer Filteranlage. Der Filter wird in der Anlage so angeordnet, dass Abluft aus einer landwirtschaftlichen Produktionsanlage, Lebensmittel- oder Futtermittelfabrikation, zuerst die erste Schicht des Filters durchströmt.

Allgemein offenbart und beansprucht die vorliegende Erfindung die Verwendung von frischem Stroh, das nicht länger als ca. zwei Jahre gelagert worden ist, vorzugsweise nicht länger als ein Jahr, als Filtermaterial.

Die Entsorgung von als Filtermaterial in der Tierhaltung und der Lebensmittel- und Futtermittelindustrie gebrauchtem Stroh erfolgt wie bei allen anderen Einsatzzwekken, in denen keine schädlichen Rückstände im Stroh verbleiben, über die in der Landwirtschaft üblichen Verfahrensketten als wirtschaftseigenes Düngemittel. Deponie- oder Verbrennungskosten fallen nicht an. Ökologische Risiken bestehen nach dem derzeitigem Kenntnisstand nicht.

Insbesondere Ammoniak aus Tierhaltungsanlagen und Anlagen zur Tierkörper- und Fischbearbeitung wird im Stroh zurückgehalten und vermutlich als Nitrat angereichert. Durch einen etwa 1,5 bis 2-jährigen Filterwechsel wird angereicherter Stickstoff als Düngemittel verwendet.

Vorzugsweise weist die Filteranlage auch eine Einrichtung zur Hochdruckbefeuchtung für die Rohluftkonditionierung auf.

Die Einleitung von wasserdampfgesättigter Abluft erhöht die Reinigungsleitung bei Geruch deutlich. Weiterhin wird in erdfeuchtem Stroh auch Staub abgebaut, was wiederum die Standzeiten des Filtermateriales verlängert. Eine wasserdampfgesättigte Rohluft wird technisch am sichersten (und gegenwärtig am preisgünstigsten) durch den Einsatz von Hochdruckbefeuchtungssystemen erzielt. Bei Systemdrücken im Bereich von 40 bis 70 bar können Tropfengrößen mit einem Durchmesser von 5 bis 7 µm erreicht werden. Das so vernebelte Wasser führt bei entsprechend eingesetzter Menge zu einer adiabatischen Kühlung und Wasserdampfsättigung der Rohluft. Die hierfür eingesetzte Technik, bestehend aus Wasseraufbereitung, Hochdruckpumpe, Druckleitungen und Düsen mit Bohrungen bis hinunter zu 0,15 mm ist diffiziler als der Einsatz von Wäschern. Die Betriebskosten sind jedoch deutlich geringer. Es entstehen durch den Einsatz von Düsenstöcken anstelle von Füllkörperwäschern nur vernachlässigbar kleine Strömungswiderstände. Diese Technik wurde bereits 1995 von MANNEBECK kurz beschrieben (Dorothee Mannebeck. Biofilter an Schweineställen. Forschungsbericht Agrartechnik Nr. 260 der Max-Eyth-Gesellschaft MEG. Diss. Agrarfakultät der Christian-Albrechts-Universität Kiel 1995).

US-A-5,480,538 beschreibt den Einsatz von Abwasser von Milchkühen (vermutlich Jauche (Harn)) zur Befeuchtung des Filtermateriales, um das Filtermaterial mit benötigten Mikroorganismen zu impfen. US-A-5,389,248 schlägt die Einleitung von Nährstoffen vor. Weiterhin wird gemäß US-A-5,480,538 täglich für jeweils eine Minute Frischwasser in das System eingeschleust. In der vorliegenden Erfindung ist ein Animpfen des Filtermaterials nicht notwendig. Die genannten US-Patentschriften offenbaren weiterhin die Bewässerung des Filtermaterials. Dies ist in der vorliegenden Erfindung nicht nur nicht notwendig, sondern schädlich, weil dadurch das Filtermaterial durchnässt und die gewünschte "Erdfeuchte" des Materials nicht erzielt würde. Ein Bewässern des Filtermaterials führt aber zu Vernässungen, wodurch sich erhöhte und ungleichmäßige Strömungswiderstände, lokale Austrocknung in den Bereichen geringerer Strömungswiderstände (bei der Reinigung nicht wasserdampfgesättigter Abluft) sowie einer Schwächung der erwünschten Biologie mit einem unerwünschten Absinken der Reinigungsleistung einstellt.

Gemäß der vorliegenden Erfindung wird nur soviel gereinigtes - zur Vermeidung von Verstopfungen in den Befeuchtungsdüsen - Frischwasser in den Rohluftstrom eingedüst, wie notwendig ist, um das Rohgas in einen wasserdampfgesättigten Zustand zu bringen. Die wasserdampfgesättigte Rohluft führt in der Folge im Filtermaterial zu einem Feuchtegleichgewicht ("Erdfeuchte"), bei welchem eine maximale Abbauleistung erzielt wird.

Die erfindungsgemäße Verwendung des in Abluftreinigungsanlagen, insbesondere als Flächenbiofilter, führt überraschenderweise zu einer starken Minimierung der Geruchsbelästigung, insbesondere bei landwirtschaftlichen Produktionsanlagen, sowie der Futter- und Lebensmittelherstellung. Besonders vorteilhaft lässt sich der erfindungsgemäße Filter als Flächenbiofilter in einem Dachstuhl oder als Dach- bzw. Dachabdeckung einer Produktionsanlage verwenden.

Durch die Verwendung von Stroh und Befeuchtungsdüsen (anstelle von Wäschern) entstehen nur geringe statische Flächenbelastungen. Bei einer Schütthöhe im Flächenbiofilter für das Stroh von ca. 0,25 m ist nur das geringe Gewicht von etwa 10 kg/m² Filterfläche abzufangen. Dafür sind leichte Unterkonstruktionen notwendig, die lediglich begehbar sein sollten und nicht befahrbar sein müssen, weil bei einem Filterwechsel wegen der vergleichsweise geringen Materialmengen und -gewichte keine Förderfahrzeuge eingesetzt werden müssen.

Diese beiden Faktoren erlauben es, die hier beschriebenen Flächenbiofilter auch bei geringen zusätzlichen Kosten im Dachstuhl eines Stalles oder einer Produktionsanlage oder auf dem Dach eines Stalles oder einer Produktionsanlage einzusetzen.

## Patentansprüche

1. Verwendung eines Filters mit mindestens einer ersten Schicht und einer zweiten Schicht in einer Abluftreinigungsanlage in landwirtschaftlichen Produktionsanlagen, Lebens- und Futtermittelbetrieben, **dadurch gekennzeichnet, dass** die erste Schicht aus lose aufgeschüttetem Stroh und die zweite Schicht aus einer gasdurchlässigen, wasserhaltenden Lage gebildet. wird, und die Schichten so in der Abluftanlage angeordnet sind, dass eine zu filtrierende Abluft zunächst die erste Schicht des Filters durchströmt.

2. Verwendung nach Anspruch 1, **dadurch gekennzeichnet, dass** die erste Schicht aus lose geschüttetem Stroh, das aus frisch geerntetem Stroh oder aus Stroh, das nicht länger als ca. zwei Jahre gelagert wurde, aufgebaut wird.

3. Verwendung nach Anspruch 1 und/oder 2, **dadurch gekennzeichnet, dass** die gasdurchlässige, wasserhaltende Lage der zweiten Schicht aus porösen anorganischen Materialien und/oder aus porösen organischen Substanzen gebildet wird.

4. Verwendung nach einem der Ansprüche 1 bis 3, **dadurch gekennzeichnet, dass** die porösen anorganischen Materialien Blähton, Perlite, Schaumglas sind.

5. Verwendung nach mindestens einem der Ansprüche 1 - 4, **dadurch gekennzeichnet, dass** die porösen organischen Substanzen geschredderte Holzmaterialien, wie Hackschnitzel, Rindenmulch, Sägespäne, Laub, Nadeln aufgeschäumte und zerkleinerte Kunststoffe sind.

6. Verwendung nach mindestens einem der Ansprüche 1 - 5, **dadurch gekennzeichnet, dass** die zweite Schicht ligninhaltig ist.

7. Verwendung nach mindestens einem der Ansprüche 1-6, **dadurch gekennzeichnet, daß** das Filter als Flächenbiofitter in einem Dachstuhl oder als Dach einer Produktionsanlage ausgeführt ist.

## Claims

1. Use of a filter having at least a first layer and a second layer in a waste air purification system in agricultural production plants, food and fodder plants, **characterized in that** said first layer is formed from loosely packed straw, and said second layer is formed by a gas-permeable water-retaining layer, and said layers are arranged in the waste air purification system in such a way that waste air to be filtered will first flow through said first layer of the filter.

2. The use according to claim 1, **characterized in that** said first layer is built from loosely packed straw obtained from freshly harvested straw or from straw which had been stored for no longer than about two years.

3. The use according to claim 1 and/or 2, **characterized in that** said gas-permeable water-retaining layer of the second layer is formed from porous inorganic materials and/or from porous organic substances.

4. The use according to any of claims 1 to 3, **characterized in that** said porous inorganic materials are expanded clay, pearlites or foamed glass.

5. The use according to at least one of claims 1 to 4, **characterized in that** said porous organic substances are shreddered wood materials, such as wood chips, bark mulch, sawdust, leaves, needles, foamed and comminuted plastic materials.

6. The use according to at least one of claims 1 to 5, **characterized in that** said second layer contains lignin.

7. The use according to at least one of claims 1 to 6, **characterized in that** said filter is embodied as an area biofilter in a roof framework or as a roof of a production plant.

## Revendications

1. Utilisation d'un filtre comportant au moins une première couche et une seconde couche dans une installation de décontamination des émissions gazeuses dans des installations de production agricoles, des exploitations de denrées alimentaires et de fourragères, **caractérisée en ce que** la première couche est formée de paille répandue en vrac et la seconde couche d'une couche perméable aux gaz, retenant l'eau, et **en ce que** les couches sont disposées dans l'installation pour émissions gazeuses de telle manière qu'une émission gazeuse à filtrer traverse tout d'abord la première couche du filtre.

2. Utilisation selon la revendication 1, **caractérisée en ce que** la première couche est constituée par de la paille répandue en vrac, qui a été fraîchement récoltée ou de paille qui n'a pas été stockée pendant plus d'environ deux ans.

3. Utilisation selon la revendication 1 et/ou 2, **caractérisée en ce que** la couche perméable aux gaz, retenant l'eau, de la seconde couche est formée de matières inorganiques poreuses et/ou de substances organiques poreuses.

4. Utilisation selon l'une des revendications 1 à 3, **caractérisée en ce que** les matières inorganiques poreuses sont de l'argile expansée, de la perlite, du verre mousse.

5. Utilisation selon l'une des revendications 1 à 4, **caractérisée en ce que** les substances organiques poreuses sont des matériaux en bois découpées, telles que des copeaux, des débris d'écorce, de la sciure de bois, du feuillage, des aiguilles, des matières synthétiques transformées en mousse et réduites en petits morceaux.

6. Utilisation selon l'une au moins des revendications 1 à 5, **caractérisée en ce que** la seconde couche contient de la lignine.

7. Utilisation selon l'une au moins des revendications 1 à 6, **caractérisée en ce que** le filtre est réalisé sous forme de biofiltre de surface dans une charpente de comble ou sous forme de toit dans une installation de production.
